# EUROPÄISCHE PATENTSCHRIFT

(11) **EP 2 023 118 B1**
(45) Veröffentlichungstag und Bekanntmachung des Hinweises auf die Patenterteilung: **12.08.2015**
(21) Anmeldenummer: 08104478.6
(22) Anmeldetag: 19.06.2008
(51) Int. Cl.: G01N 3/20, G01N 17/00

(54) **Prüfvorrichtung zur simultanen Beaufschlagung eines scheibenförmigen Prüflings mit einem Prüfgas und mechanischer Last sowie dazugehöriges Prüfverfahren**
Test device for simultaneously charging a disc-shape testpiece with a test gas and mechanical load and corresponding testing method
Dispositif de contrôle destiné à soumettre un échantillon en forme de disque à un gaz de contrôle et charge mécanique ainsi que procédé de contrôle correspondant

(30) Priorität: 30.07.2007 DE 102007035917
(43) Veröffentlichungstag der Anmeldung: 11.02.2009
(73) Patentinhaber: Bundesanstalt für Materialforschung und -prüfung (BAM), 12205 Berlin (DE)
(72) Erfinder: Dr. Kranzmann, Axel, 12249, Berlin (DE); Hünert, Daniela, 12163, Berlin (DE)
(74) Vertreter: Zimmermann & Partner Patentanwälte mbB

(56) Entgegenhaltungen:
- EP-A1- 0 354 250
- DE-C1- 19 637 788
- FR-A1- 2 738 063
- US-A- 1 762 164
- US-A- 3 015 947
- US-A- 4 567 774
- US-A- 5 424 634

## Beschreibung

Die Erfindung betrifft eine Prüfvorrichtung zur simultanen Beaufschlagung eines scheibenförmigen Prüflings mit einem fließendem und unter Druck stehenden Prüfgas und mechanischer Last sowie ein dazugehöriges Prüfverfahren.

### Technologischer Hintergrund und Stand der Technik

Bauteile aus unterschiedlichsten Materialen werden in der Praxis häufig hohen mechanischen Lasten in Gegenwart korrosiver fließender Gase unter Druck ausgesetzt. Beispiele für solche Bauteile umfassen Gasturbinenschaufeln, Kompressoren, Pipelines und CO₂-Injektoren von Öl- oder Gasförderanlagen zur Erschließung von Öl- oder Gasfeldern. Die erstmalige Anwendung neuer oder auch bekannter Werkstoffe in solchen Bauteilen erfordert eine Beurteilung des Versagensrisikos. Bisherige Auslegungsmethoden nutzen Kennwerte, die aus reinen mechanischen Tests und reinen Korrosionstests abgeleitet werden. Die Ergebnisse werden zumeist derart kombiniert, dass der Werkstoffverlust oder die Abmagerung durch Gaserosion und Gaskorrosion über die Zeit berechnet wird und der Restwerkstoffstärke eine mechanische Eigenschaft mit Risikofaktor zugeordnet wird. Diese Methode versagt, wenn der Werkstoff stärker als im Risikofaktor vorgesehen seine mechanischen Eigenschaften verändert beziehungsweise Festigkeit verliert. Die Methode kann insbesondere versagen, wenn die mechanische Last und die Korrosion positiv rückkoppeln, d.h. die Korrosionsrate unter Last ansteigt. Im Fall druckführender Systeme ist zusätzlich eine Abhängigkeit vom Gesamtdruck zu beachten. Eine Folge der Limitierungen der bekannten Prüfverfahren ist, dass aus Sicherheitsgründen nicht das volle Potential der eingesetzten Werkstoffe bei der Berechung des Versagensrisikos einfliest.

Es sind standardisierte Korrosionsversuche mit gleichzeitiger mechanischer Überlagerung bekannt, bei denen Biege- oder Zugspannungen in einem korrosiven flüssigen Medium beobachtet werden. Es existieren weiterhin Prüfverfahren, mit denen eine Temperaturabhängigkeit der Korrosionsrate bestimmt werden kann. Die Überlagerung von Temperatur, Spannung und Last kann bekanntermaßen in Zug- oder Biegeversuchen erfasst werden.

So beschreibt die Druckschrift US 4 567 774 A die Bestimmung des mechanischen Verhaltens fester Materialien unter Verwendung von Miniatur-Proben. Die Druckschrift DE 196 37 788 C1 beschreibt eine mobile modulare Anlage zur Erzeugung von korrosivem Konstant- und Wechselklima für parallel betreibbare Prüfkammern und die Druckschrift FR 2 738 063 beschreibt eine Versuchsanordnung zur Ermittlung einer Ermüdungsbeanspruchung in hygrothermischer Umgebung.

Die bekannten Prüfvorrichtungen und dazugehörige Prüfverfahren weisen je nach Auslegung und Anwendung weitere Nachteile auf, zum Beispiel:
- Ein zusätzlicher Gesamtdruck ist zumeist nur in Hohlprüflingen von Innen aufbringbar. Die Herstellung derartiger Prüflinge ist sehr kostenintensiv.
- Oft ist die Auswahl der korrosiven Medien durch die Durchführungen für die mechanische Lasteinleitung und die Probenhalter stark begrenzt.
- Bei standardisierten Zugversuchen werden spezielle Prüflinge verwendet, deren Herstellung sehr aufwändig ist.
- Oft werden die Prüflinge beheizt. Dies entspricht in der Regel nicht der technischen Anwendung, zum Beispiel im Falle von Behältern und Rohren.
- Durch Reaktorwände und/oder voluminöse Ofeneinrichtungen sind nur langsame Abkühlraten gegeben.
- Die korrosiv belasteten Probenhalter müssen intensiv gekühlt werden, damit diese nicht selbst korrodieren.

Aufgabe der vorliegenden Erfindung ist es, eine Prüfvorrichtung und ein Prüfverfahren bereitzustellen, die ein oder mehrere der geschilderten Nachteile des Standes der Technik überwinden und es erlauben, das Versagensrisiko von Bauteilen, die gleichzeitig korrosiven Prozessen und mechanischer Last ausgesetzt sind, besser zu beurteilen.

### Zusammenfassung der Erfindung

Ein erster Aspekt der Erfindung liegt in der Bereitstellung einer Prüfvorrichtung zur simultanen Beaufschlagung eines scheibenförmigen Prüflings mit einem fließendem und unter Druck stehenden Prüfgas und mechanischer Last. Die erfindungsgemäße Prüfvorrichtung umfasst die folgenden Komponenten:
- einen Probensitz, der so ausgelegt ist, dass ein Randbereich des Prüflings auf dem Probensitz aufliegt und ein Innenbereich des Prüflings von seiner Ober- und Unterseite zugänglich ist;
- einen oberhalb des Probensitzes angeordneten Stempel, mit dem eine vorgebbare mechanische Last auf die Oberseite des Prüflings ausgeübt werden kann; und
- einen unterhalb des Probensitzes angeordneten Gaszuführteller, mit dem das Prüfgas an die Unterseite des Prüflings leitbar ist.

Mit Hilfe der erfindungsgemäßen Prüfvorrichtung ist es erstmalig möglich, den gleichzeitigen Einfluss von mechanischer Last und Gaserosionen bzw. Gaskorrosionen in definierter Weise zu prüfen. Die Prüfvorrichtung setzt dabei unter anderem auf eine standardisierbare, flache Form des Prüflings, die für viele Werkstoffe leicht und kostengünstig herstellbar ist. Die Oberflächen der scheibenförmigen Prüflinge können ggf. auch Beschichtungen tragen.

Die erfindungsgemäße Prüfvorrichtung umfasst demnach Mittel zur simultanen Beaufschlagung des Prüflings mit einem Prüfgas unter Druck (einem potentiell korrosiven Gas) und mechanischer Last. Daneben können jedoch auch weitere Parameter des Prüfverfahrens variiert werden, z. B. ein Gesamtdruck, eine Temperatur des Prüflings oder einer Temperatur des Prüfgases, Fließgeschwindigkeit des Gases über den Prüfling. Die dazu notwendigen Mittel der Prüfvorrichtung werden weiter unten noch näher erläutert.

Nach einer bevorzugten Ausführungsform sind der Probensitz, der Stempel und der Gaszuführteller im Innern eines druckbeständigen Prüfbehälters angeordnet. Mit anderen Worten, die Prüfvorrichtung ist zur Durchführung von Prüfverfahren ausgelegt, bei denen im Innern des Prüfbehälters ein überatmosphärischer Druck herrscht. Beispielsweise kann die Prüfvorrichtung für Prüfverfahren unter einem Druck von bis zu 350 bar ausgelegt sein. Damit steht der Druck im Innern des Prüfbehälters als einstellbarer Parameter für das Prüfverfahren zur Verfügung.

Vorzugsweise weist der Prüfbehälter als äußere Schale einen von einem Kühlmittel durchsetzbaren Doppelmantel auf. Ist der Doppelmantel beispielsweise an einen Thermostaten gekoppelt, so lässt sich über das zirkulierende Kühlmittel eine Temperatur im Innern der Prüfvorrichtung regeln.

Der erfindungsgemäße Probensitz ist so ausgelegt, dass ein Randbereich des Prüflings auf dem Probensitz aufliegt und ein Innenbereich des Prüflings von seiner Ober- und Unterseite zugänglich ist. Mit anderen Worten, der Prüfling wird nur an seinen Rändern in der für die Durchführung des Prüfverfahrens erforderlichen Position gehalten. Der gesamte innere Bereich des Prüflings steht für Lasteintrag und Beaufschlagung des Prüfgases zur Verfügung.

Vorzugsweise enthält die Prüfvorrichtung eine Unterschale, die den Gaszuführteller aufnimmt, und der Probensitz umfasst auf einem Rand der Unterschale sitzende Wälzkörper aus einem inerten Material. Nach dieser Ausführungsform ist also vorgesehen, dass der Prüfling auf die Unterschale gesetzt wird, die im Inneren der Prüfvorrichtung angeordnet ist. Der Prüfling liegt dabei oben auf dem Rand der Unterschale, genauer auf einer Vielzahl von in diesem Bereich angeordneten Wälzkörpern. Diese Wälzkörper bestehen aus einem inerten Material und sind so ausgelegt, dass der Prüfling bei mechanischem Lasteintrag über den Stempel infolge der Biegebelastung weiter ins Innere der Unterschale gezogen wird und dabei auf den Wälzkörpern gleitet.

Nach einer bevorzugten Variante der vorangehenden Ausführungsform enthält die Prüfvorrichtung zusätzlich eine Oberschale, die den Stempel aufnimmt, und der Probensitz umfasst auf einem Rand der Oberschale sitzende Wälzkörper aus einem inerten Material. Geometrie und Materialwahl der Wälzkörper auf der Oberschale können in analoger Weise, wie bei den entsprechenden Wälzkörpern der Unterschale vorgegeben werden. Die Wälzkörper der Oberschale erlauben immer noch ein Gleiten des Prüflings bei Biegebelastung durch den Stempel. Vornehmlich liegt die Aufgabe der oberen Wälzkörper aber darin, einen Klemmdruck zur Fixierung des Prüflings während des Prüfverfahrens aufzubringen. Die Wälzkörper der Ober- und Unterschale sind vorzugsweise Kugeln. Bevorzugte inerte Materialien sind SiC, Al₂O₃, ZrO₂ oder WC.

Die erfindungsgemäße Prüfvorrichtung umfasst einen unterhalb des Probensitzes angeordneten Gaszuführteller, mit dem das Prüfgas an die Unterseite des Prüflings leitbar ist.

Vorzugsweise ist der Gaszuführteller in seiner relativen Lage zum Prüfling verstellbar ausgelegt, so dass eine Spaltbreite zwischen Prüfling und Gaszuführteller variiert werden kann. Durch die Änderung der Spaltbreite kann eine Strömungsgeschwindigkeit des Prüfgases verändert werden. So nimmt mit abnehmender Spaltbreite die Strömungsgeschwindigkeit des Prüfgases zu. Der Gaszuführteller kann dabei beispielsweise auch mit einem geeigneten Aktuator gekoppelt werden, der es ermöglicht, die Spaltbreite während des Prüfverfahrens zu verändern, um die realen Einsatzbedingungen des zu testenden Prüflings besser nachzubilden.

Der Gaszuführteller kann auf einem Hohlstempel sitzen, über den das Prüfgas zum Gaszuführteller geleitet wird. Der Gaszuführteller umfasst dann insbesondere eine mittig angeordnete Austrittsöffnung für das Prüfgas und konzentrisch um die Austrittsöffnung angeordnete Rillen. Die vorgebbare Rilletextur der zum Prüfling zugewandten Oberseite des Gaszuführtellers hat den Vorteil, dass das Gas turbulent geführt wird und sich keine lokalen Anreicherungen abdampfender Komponenten vom Grundmaterial der Probe bilden können.

Die erfindungsgemäße Prüfvorrichtung umfasst weiterhin einen oberhalb des Probensitzes angeordneten Stempel, mit dem eine vorgebbare mechanische Last auf die Oberseite des Prüflings ausgeübt werden kann. Während des Prüfverfahrens drückt demnach der Stempel von der Oberseite auf den Prüfling. Auch der Stempel kann mit einem geeigneten Aktuator gekoppelt werden, so dass die mechanische Last während des Prüfverfahrens variiert werden kann.

Vorzugsweise umfasst der Stempel eine Gasleitung, über die das Prüfgas oder ein inertes Gas auf die Oberseite des Prüflings geleitet wird. Hierdurch wird die Variabilität der Prüfvorrichtung und des damit betriebenen Prüfverfahrens weiter erhöht.

Bevorzugt ist ferner, wenn der Stempel an der Lasteinleitung eine kugelartige Form hat und aus einem inerten und elastischen Material besteht. So kann zur Vermeidung punktförmiger Lasteinleitung vorgesehen sein, dass im Bereich der Spitze des Stempels eine duktile Folie, z. B. Goldfolie aufgebracht ist.

Ein weiterer Aspekt der Erfindung liegt in der Bereitstellung eines Verfahrens zur simultanen Beaufschlagung eines scheibenförmigen Prüflings mit einem fließendem und unter Druck stehenden Prüfgas und mechanischer Last. Das Verfahren umfasst die Schritte:
(i) Bereitstellen einer Prüfvorrichtung, umfassend
   - einen Probensitz, der so ausgelegt ist, dass ein Randbereich des Prüflings auf dem Probensitz aufliegt und ein Innenbereich des Prüflings von seiner Ober- und Unterseite zugänglich ist;
   - einen oberhalb des Probensitzes angeordneten Stempel, mit dem eine vorgebbare mechanische Last auf die Oberseite des Prüflings ausgeübt werden kann; und
   - einen unterhalb des Probensitzes angeordneten Gaszuführteller, mit dem das Prüfgas an die Unterseite des Prüflings leitbar ist;
(ii) Bereitstellen des scheibenförmigen Prüflings;
(iii) Einlegen des Prüflings in die Prüfvorrichtung; und
(iv) Beaufschlagen einer Oberseite des Prüflings mit einer vorgebbaren Last sowie gleichzeitiges Anströmen einer Unterseite des Prüflings mit dem Prüfgas.

Im Schritt (i) wird also die weiter oben beschriebene Prüfvorrichtung bereitgestellt. Die Bereitstellung umfasst natürlich auch die Herstellung der Betriebsbereitschaft, d.h. unter anderem den Anschluss von Prüfgas sowie die Sicherstellung der Energieversorgung der vorhandenen elektrischen Verbraucher in der Prüfvorrichtung.

Im Schritt (ii) wird ein scheibenförmiger Prüfling bereitgestellt. Der Prüfling ist vorzugsweise 1 bis 5 mm dick. Länge und Breite bzw. Durchmesser des Prüflings sind an die Gegebenheiten der Prüfvorrichtung anzupassen. Der Prüfling sollte möglichst so ausgelegt sein, dass eine Verformung im Zuge des Lasteintrags zu einer etwa 1 %-igen Längendehnung führt. Viele metallische Werkstoffe liegen bereits als Blech vor, das für das erfindungsgemäße Prüfungsverfahren nur noch in die für die konkrete Prüfvorrichtung geeignete Form zurechtgeschnitten werden muss. Damit ist die Herstellung des Prüflings sehr kostengünstig.

Im Schritt (iii) wird der Prüfling in die Prüfvorrichtung eingelegt. Dies beinhaltet üblicherweise ein Öffnen der Prüfvorrichtung und ein Auflegen des Prüflings auf den Probensitz.

Schließlich wird im Schritt (iv) die Oberseite des Prüflings mit einer vorgebbaren Last beaufschlagt, während gleichzeitig von der Unterseite des Prüflings das Prüfgas herangeführt wird.

Nach einer bevorzugten Ausführungsform des Verfahrens sind der Probensitz, der Stempel und der Gaszuführteller im Innern eines druckbeständigen Prüfbehälters angeordnet. Der Schritt (iv) erfolgt unter Anlegen eines Druckes. Mit anderen Worten, für die Gestaltung des Prüfverfahrens steht ein weiterer Parameter zur Verfügung, nämlich der Gesamtdruck.

Vorzugsweise liegt im Schritt (iv) eine Temperatur des Prüflings im Bereich von - 50 °C bis 850 °C. Eine Temperatur des Prüfgases liegt weiterhin vorzugsweise im Schritt (iv) im Bereich von - 50 °C bis 1000 °C. Die für die Einstellung der Temperaturen geeigneten Mittel sind hinlänglich bekannt, so dass auf eine nähere Erläuterung verzichtet wird. Es stehen somit zwei weitere Parameter zur Verfügung, die die Variabilität des Prüfverfahrens weiter erhöhen.

Weiterhin ist bevorzugt, wenn eine Strömungsgeschwindigkeit des Prüfgases durch Änderung von Gasmassenfluss und der Spaltbreite zwischen dem Gaszuführteller und dem Prüfling eingestellt wird. Die Strömungsgeschwindigkeit des Prüfgases liegt dabei insbesondere bei 0,1 m/s bis 100 m/s.

Eine bevorzugte Variante der Verfahrensführung sieht vor, dass im Schritt (iv) ein oder mehrere der Größen Strömungsgeschwindigkeit des Prüfgases, Temperatur des Prüflings, Temperatur des Prüfgases, Druck und mechanische Last während der Durchführung des Verfahrens verändert werden.

### Beschreibung der Zeichnungen

Die Erfindung wird nachfolgend in einem Ausführungsbeispiel und anhand der zugehörigen Zeichnungen näher erläutert. Es zeigen:
- Figur 1: eine dreidimensionale Schnittansicht einer erfindungsgemäßen Prüfvorrichtung; und
- Figur 2: die Prüfvorrichtung aus Fig. 1 in einer zweidimensionalen Schnittansicht.

### Detaillierte Beschreibung der Erfindung

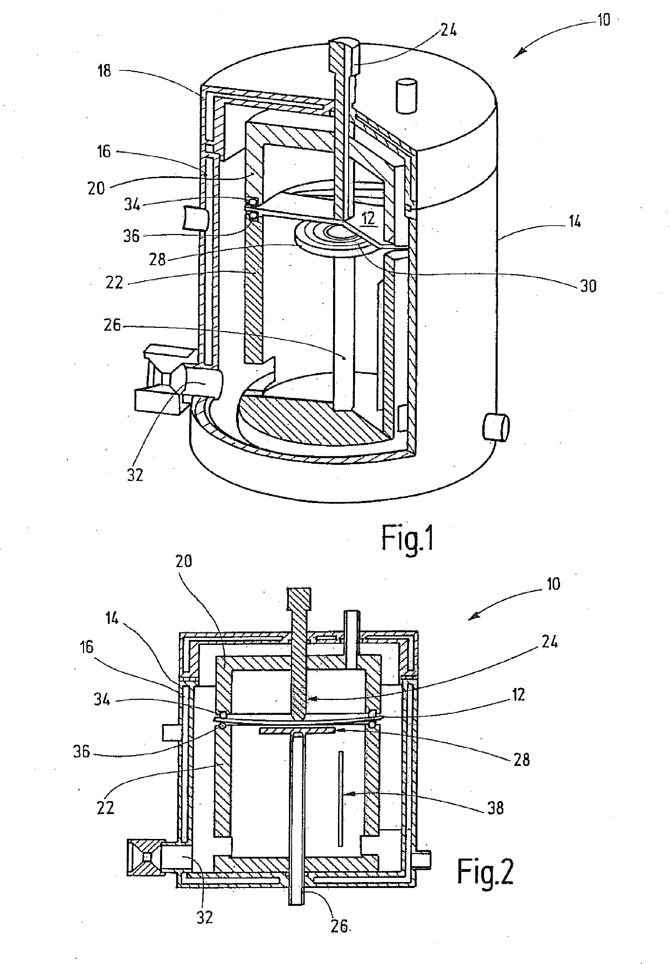

Den Figuren 1 und 2 sind unterschiedliche Schnittdarstellungen einer Prüfvorrichtung 10 zur simultanen Beaufschlagung eines scheibenförmigen Prüflings 12 mit einem Prüfgas (in der Regel einem fließenden und unter Druck stehendem korrosiven Gas) und mechanischer Last zu entnehmen.

Der Prüfling 12 liegt - wie hier dargestellt - als kreisförmige Scheibe aus dem zu untersuchenden Material, beispielsweise einem metallischen Werkstoff, vor. Die Herstellung derartiger Prüflinge 12 für die Prüfvorrichtung 10 lässt sich mit Hilfe bekannter Bearbeitungsverfahren in einfacher Weise umsetzen, so dass an dieser Stelle auf eine nähere Erläuterung verzichtet wird.

Die Prüfvorrichtung 10 ist als druckbeständiger Prüfbehälter 14 ausgelegt, hier zweigliedrig aufgebaut mit einem Gefäß 16 und einem dazugehörigen Deckel 18. Das Gefäß 16 als auch der Deckel 18 beinhalten einen von einem Kühlmittel durchsetzbaren Doppelmantel. Das Kühlmittel kann beispielsweise Wasser sein, das über einen hier nicht dargestellten Thermostaten zirkuliert wird.

Im Innern des Prüfbehälters 14 befindet sich ein aus Ober- und Unterschale 20, 22 bestehender Innenbehälter. Der Innenbehälter definiert einen Probenraum, in dem der Prüfling 12 zur Durchführung des Prüfverfahrens angeordnet wird.

Durch den Deckel 18 des Prüfbehälters 14 und die Oberschale 20 wird etwa mittig ein Stempel 24 geführt. Über den Stempel 24 wird eine vorgebbare Last auf den Prüfling 12 ausgeübt.

Auch das Gefäß 16 des Prüfbehälters 14 und die Unterschale 22 weisen mittig einen Durchbruch auf, durch den ein Hohlstempel 26 geführt wird, dessen Austrittsöffnung etwa mittig in einem Gaszuführteller 28 mündet. Mit dem Hohlstempel 26 wird das Prüfgas zum Gaszuführteller 28 geleitet.

Der Gaszuführteller 28 besitzt eine Vielzahl von Rillen 30, die radial umlaufend um die Austrittsöffnung des Hohlstempels 26 auf einer Oberseite des Gaszuführtellers 28 angeordnet sind. Der Hohlstempel 26 ist weiterhin verschieblich gelagert, so dass eine Spaltbreite zwischen Gaszuführteller 28 und Prüfling 12 einstellbar ist. Das durch die Eintrittsöffnung im Bereich des Gaszuführtellers 28 eintretende Prüfgas fließt demnach in den von Prüfling 12 und Gaszuführteller 28 vorgegebenen Spalt und tritt von dort in einen unteren Bereich des Probenraums ein, um über eine Austrittsöffnung 32 wieder die Prüfvorrichtung 10 zu verlassen.

Der Prüfling 12 ist während der Durchführung des Prüfverfahrens auf einem Probensitz fixiert. Dieser Probensitz umfasst vorliegend an der Ober- als auch Unterschale 20, 22 sitzende Wälzkörper 34, 36, hier in Form von Kugeln aus SiC. Die Wälzelemente 34, 36 sind auf den Rändern von Ober- und Unterschale 20, 22 angeordnet (etwa in der Art eines Wälzlagers). Bei Beaufschlagung des Prüflings 12 mit einer mechanischen Last kann der Prüfling 12 in Richtung der Mitte verbogen werden, ohne dass Zugspannungen größeren Ausmaßes auftreten, den er gleitet an seinen Seitenrändern entlang der Wälzkörper 34, 36. Hierdurch ist eine radialsymmetrische Spannungsverteilung während des Prüfverfahrens sichergestellt.

Nachfolgend wird ein Verfahren zur simultanen Beaufschlagung des scheibenförmigen Prüflings 12 mit einem Prüfgas und mechanischer Last unter Zuhilfenahme der zuvor beschriebenen Prüfvorrichtung 10 näher erläutert.

Zunächst wird der Prüfbehälter 14 geöffnet und der Prüfling 12 wird auf die Wälzkörper 36 der Unterschale 22 gesetzt. Nach dem Schließen liegen auch die Wälzkörper 34 der Oberschale 20 am Prüfkörper 12 an und bringen eine zusätzliche Klemmkraft auf, um den Prüfling 12 gegen ein Verschieben während der Durchführung des Prüfverfahrens zu sichern.

Der Prüfling 12 wird nun mit dem Stempel 24 mit einer vorgebbaren Last beaufschlagt. Typischer Weise werden Belastungen von bis zu 150 Megapascal oder das Lastäquivalent zu 1 % Längendehnung vorgegeben. Anzumerken ist, dass der Stempel 24 durch einen hier nicht dargestellten Aktuator auch während der Durchführung des Verfahrens bewegt werden kann, um den Lasteintrag zu variieren und damit eine ggf. dem tatsächlichen Bauteil näher kommende Belastungssituation nachzubilden.

Der belastete Prüfling 14 wird nun von seiner Unterseite mit dem Prüfgas angeströmt. Gegebenenfalls kann auch der Stempel 24 für den Lasteintrag eine Gaszuleitung beinhalten, über die ergänzend auf der Oberseite des Prüflings 14 das Prüfgas herangeführt werden kann.

Das Prüfgas wird in jedem Fall durch den Hohlstempel 26 zu einer mittig gelegenen Austrittsöffnung des Gaszuführtellers 28 geleitet. Durch Vorgabe von Gasmassenfluss und Einstellung der Spaltbreite zwischen dem Gaszuführteller 28 und dem Prüfling 12 kann die Strömungsgeschwindigkeit des Prüfgases am Prüfling 12 eingestellt werden. Auch hier kann durch Änderung der Spaltbreite und/oder Änderung des Gasmassenflusses ggf. eine Variation während der Durchführung des Prüfverfahrens erfolgen.

Das Prüfgas durchläuft nach Austritt aus dem Spalt den unterhalb des Gaszuführtellers 28 gelegenen Teil des Probenraums und kann dabei beispielsweise einen zu Vergleichszwecken eingebrachten zweiten Prüfling 38 umströmen, auf den keine mechanische Last wirkt. Das Prüfgas verlässt dann über die Austrittsöffnung 32 den Prüfbehälter 14.

### BEZUGSZEICHENLISTE

- 10: Prüfvorrichtung
- 12: Prüfling
- 14: Prüfbehälter
- 16: Gefäß
- 18: Deckel
- 20: Oberschale
- 22: Unterschale
- 24: Stempel
- 26: Hohlstempel
- 28: Gaszuführteller
- 30: Rillen
- 32: Austrittsöffnung
- 34, 36: Wälzkörper
- 38: zweiter Prüfling

## Patentansprüche

1. Prüfvorrichtung (10) zur simultanen Beaufschlagung eines scheibenförmigen Prüflings (12) mit einem fließenden und unter Druck stehendem Prüfgas und mechanischer Last, umfassend die folgenden Komponenten:
- einen Probensitz, der so ausgelegt ist, dass ein Randbereich des Prüflings (12) auf dem Probensitz aufliegt und ein Innenbereich des Prüflings (12) von seiner Oberund Unterseite zugänglich ist;
- einen oberhalb des Probensitzes angeordneten Stempel (24), mit dem eine vorgebbare mechanische Last auf die Oberseite des Prüflings (12) ausgeübt werden kann; und
- einen unterhalb des Probensitzes angeordneten Gaszuführteller (28), mit dem das Prüfgas an die Unterseite des Prüflings (12) leitbar ist,
**dadurch gekennzeichnet,**
**dass** der Gaszuführteller (28) in seiner relativen Lage zum Prüfling (12) verstellbar ausgelegt ist, so dass eine Spaltbreite zwischen Prüfling (12) und Gaszuführteller (28) variierbar ist.

2. Prüfvorrichtung nach Anspruch 1, **dadurch gekennzeichnet, dass** der Probensitz, der Stempel (24) und der Gaszuführteller (28) im Innern eines druckbeständigen Prüfbehälters (14) angeordnet sind.

3. Prüfvorrichtung nach Anspruch 2, **dadurch gekennzeichnet, dass** der Prüfbehälter (14) einen Probenraum bereitstellt, der den Gaszuführteller (28) aufnimmt und der eine unterhalb des Gaszuführtellers (28) angeordnete Gasaustrittsöffnung (32) umfasst.

4. Prüfvorrichtung nach Anspruch 2 oder 3, **dadurch gekennzeichnet, dass** der Prüfbehälter (14) als äußere Schale einen von einem Kühlmittel durchsetzbaren Doppelmantel aufweist.

5. Prüfvorrichtung nach einem der Ansprüche 2 bis 4, **dadurch gekennzeichnet, dass** die Prüfvorrichtung (10) eine Unterschale (22) enthält, die den Gaszuführteller (28) aufnimmt, und der Probensitz auf einem Rand der Unterschale (22) sitzende Wälzkörper (36) aus einem inerten Material umfasst.

6. Prüfvorrichtung nach Anspruch 5, **dadurch gekennzeichnet, dass** die Prüfvorrichtung (10) eine Oberschale (20) enthält, die den Stempel (24) aufnimmt, und der Probensitz auf einem Rand der Oberschale (20) sitzende Wälzkörper (34) aus einem inerten Material umfasst.

7. Prüfvorrichtung nach Anspruch 5 oder 6, **dadurch gekennzeichnet, dass** die Wälzkörper (34, 36) Kugeln sind.

8. Prüfvorrichtung nach einem der vorhergehenden Ansprüche, **dadurch gekennzeichnet, dass** der Gaszuführteller (28) auf einem Hohlstempel (26) sitzt, über den das Prüfgas zum Gaszuführteller (28) leitbar ist.

9. Prüfvorrichtung nach Anspruch 8, **dadurch gekennzeichnet, dass** der Gaszuführteller (28) eine mittig angeordnete Austrittsöffnung für das Prüfgas und konzentrisch um die Austrittsöffnung angeordnete Rillen (30) umfasst.

10. Prüfvorrichtung nach einem der vorhergehenden Ansprüche, **dadurch gekennzeichnet, dass** der Stempel (24) eine Gasleitung umfasst, über die das Prüfgas oder ein Inertgas auf die Oberseite des Prüflings (12) leitbar ist.

11. Prüfvorrichtung nach einem der vorhergehenden Ansprüche, **dadurch gekennzeichnet, dass** der Stempel (24) an der Lasteinleitung eine kugelartige Form hat und aus einem inerten und elastischen Material besteht.

12. Verfahren zur simultanen Beaufschlagung eines scheibenförmigen Prüflings (12) mit einem fließendem und unter Druck stehenden Prüfgas und einer mechanischen Last, umfassend die Schritte:
(i) Bereitstellen einer Prüfvorrichtung (10), umfassend:
- einen Probensitz, der so ausgelegt ist, dass ein Randbereich des scheibenförmigen Prüflings (12) auf dem Probensitz aufliegt und ein Innenbereich des scheibenförmigen Prüflings (12) von seiner Ober- und Unterseite zugänglich ist;
- einen oberhalb des Probensitzes angeordneten Stempel (24), mit dem eine vorgebbare mechanische Last auf eine Oberseite des scheibenförmigen Prüflings (12) ausgeübt werden kann; und
- einen unterhalb des Probensitzes angeordneten Gaszuführteller (28), mit dem das Prüfgas an eine Unterseite des scheibenförmigen Prüflings (12) leitbar ist, wobei der Gaszuführteller (28) in seiner relativen Lage zum scheibenförmigen Prüfling (12) verstellbar ausgelegt ist, so dass eine Spaltbreite zwischen dem scheibenförmigen Prüfling (12) und dem Gaszuführteller (28) variierbar ist;
(ii) Bereitstellen des scheibenförmigen Prüflings (12);
(iii) Einlegen des scheibenförmigen Prüflings (12) in die Prüfvorrichtung (10);
(iv) Einstellen einer Strömungsgeschwindigkeit des Prüfgases am Prüfling (12) durch Vorgeben eines Gasmassenflusses und/oder Einstellen einer Spaltbreite zwischen dem Gaszuführteller (28) und dem scheibenförmigen Prüfling (12), und
(v) Beaufschlagen der Oberseite des scheibenförmigen Prüflings (12) mit einer vorgebbaren Last sowie gleichzeitiges Anströmen der Unterseite des scheibenförmigen Prüflings (12) mit dem Prüfgas.

13. Verfahren nach Anspruch 12, bei dem der Probensitz, der Stempel (24) und der Gaszuführteller (28) im Innern eines druckbeständigen Prüfbehälters (14) angeordnet sind und der Schritt (iv) unter Anlegen eines Druckes erfolgt.

14. Verfahren nach Anspruch 12 oder 13, bei dem bei dem im Schritt (iv) eine Temperatur des scheibenförmigen Prüflings (12) im Bereich von - 50°C bis 850°C liegt.

15. Verfahren nach einem der Ansprüche 12 bis 14, bei dem bei dem im Schritt (iv) eine Temperatur des Prüfgases im Bereich von - 50°C bis 1000°C liegt.

16. Verfahren nach Anspruch 15, bei dem die Strömungsgeschwindigkeit des Prüfgases bei 0,1 m/s bis 100 m/s liegt.

17. Verfahren nach einem der Ansprüche 12 bis 16, bei dem bei dem im Schritt (iv) eine oder mehrere der Größen Strömungsgeschwindigkeit des Prüfgases, Temperatur des scheibenförmigen Prüflings (12), Temperatur des Prüfgases, Gasdruck und mechanische Last während der Durchführung des Verfahrens verändert werden.

## Claims

1. A test device (10) for simultaneously subjecting a disc-shaped test-piece (12) to a flowing and pressurised test gas and a mechanical load, comprising the following components:
- a test-piece seat, which is designed such that an edge region of the test-piece (12) rests on the test-piece seat and an inner region of the test-piece (12) is accessible from its top side and underside;
- a stamp (24) which is disposed above the test-piece seat and with which a predetermined mechanical load can be exerted on the top side of the test-piece (12); and
- a gas feed plate (28) with which the test gas can be conveyed to the underside of the test-piece (12),
**characterised in that**
the gas feed plate (28) is designed so as to be adjustable in its relative position with respect to the test-piece (12), so that a gap width between the test-piece (12) and the gas feed plate (28) can be varied.

2. The test device according to claim 1, **characterised in that** the test-piece seat, the stamp (24) and the gas feed plate (28) are disposed in the interior of a pressure-resistant test vessel (14).

3. The test device according to claim 2, **characterised in that** the test vessel (14) provides a test-piece chamber, which accommodates the gas feed plate (28) and which comprises a gas exit opening (32) disposed beneath the gas feed plate (28).

4. The test device according to claim 2 or 3, **characterised in that** the test vessel (14) as an outer shell comprises a double casing through which a coolant can permeate.

5. The test device according to any one of claims 2 to 4, **characterised in that** the test device (10) comprises a lower shell (22), which accommodates the gas feed plate (28), and the test-piece seat comprises rolling elements (36) made of an inert material sitting on an edge of the lower shell (22).

6. The test device according to claim 5, **characterised in that** the test device (10) comprises an upper shell (20), which accommodates the stamp (24), and the test-piece seat comprises rolling elements (34) made of an inert material sitting on an edge of the upper shell (20).

7. The test device according to claim 5 or 6, **characterised in that** the rolling elements (34, 36) are spheres.

8. The test device according to any one of the preceding claims, **characterised in that** the gas feed plate (28) sits on a hollow stamp (26), via which the test gas is can be conveyed to the gas feed plate (28).

9. The test device according to claim 8, **characterised in that** the gas feed plate (28) comprises a centrally disposed exit opening for the test gas and grooves (30) disposed concentrically around the exit opening.

10. The test device according to any one of the preceding claims, **characterised in that** the stamp (24) comprises a gas line, via which the test gas or an inert gas can be conveyed onto the top side of the test-piece (12).

11. The test device according to any one of the preceding claims, **characterised in that** the stamp (24) has a spherical shape at the load introduction and is made of an inert and elastic material.

12. A method for simultaneously subjecting a disc-shaped test-piece (12) to a flowing and pressurised test gas and a mechanical load, comprising the steps:
(i) provision of a test device (10), comprising:
- a test-piece seat, which is designed such that an edge region of the disc-shaped test-piece (12) rests on the test-piece seat and an inner region of the disc-shaped test-piece (12) is accessible from its top side and underside;
- a stamp (24) which is disposed above the test-piece seat and with which a predetermined mechanical load can be exerted on a top side of the disc-shaped test-piece (12); and
- a gas feed plate (28) which is disposed beneath the test-piece seat and with which the test gas can be conveyed to the underside of the disc-shaped test-piece (12), wherein the gas feed plate (28) is designed adjustable in its relative position with respect to the disc-shaped test-piece (12), so that a gap width between the disc-shaped test-piece (12) and the gas feed plate (28) can be varied;
(ii) provision of the disc-shaped test-piece (12);
(iii) placing of the disc-shaped test-piece (12) in the test device (10);
(iv) adjustment of a flow rate of the test gas on the test-piece (12) by selecting a gas mass flow and/or adjusting a gap width between the gas feed plate (28) and the disc-shaped test-piece (12), and
(v) subjecting the top side of the disc-shaped test-piece (12) to a predetermined load and simultaneously subjecting the underside of the disc-shaped test-piece (12) to a flow of the test gas.

13. The method according to claim 12, wherein the test-piece seat, the stamp (24) and the gas feed plate (28) are disposed in the interior of a pressure-resistant test vessel (14) and the step (iv) takes place with the application of a pressure.

14. The method according to claim 12 or 13, wherein in step (iv) a temperature of the disc-shaped test-piece (12) lies in the range from -50°C to 850°C.

15. The method according to any one of claims 12 to 14, wherein in step (iv) a temperature of the test gas lies in the range from -50°C to 1000°C.

16. The method according to claim 15, wherein the flow rate of the test gas lies at 0.1 m/s to 100 m/s.

17. The method according to any one of claims 12 to 16, wherein in step (iv) one or more of the variables - flow rate of the test gas, temperature of the disc-shaped test-piece (12), temperature of the test gas, gas pressure and mechanical load - are changed during the performance of the method.

## Revendications

1. Dispositif d'essai (10) pour soumettre une éprouvette d'essai en forme de disque (12) à l'action d'un gaz d'essai en écoulement et sous pression, et simultanément à une charge mécanique, le dispositif comprenant les composants suivants :
- un siège d'échantillon, qui est configuré de manière à ce qu'une zone de bordure de l'éprouvette d'essai (12) repose sur le siège d'échantillon, et qu'une zone intérieure de l'éprouvette d'essai (12) soit accessible par son côté supérieur et son côté inférieur ;
- un poinçon (24) agencé au-dessus du siège d'échantillon et à l'aide duquel il est possible d'exercer une charge mécanique pouvant être prédéterminée, sur le côté supérieur de l'éprouvette d'essai (12) ; et
- une coupelle d'amenée de gaz (28) agencée en-dessous du siège d'échantillon et à l'aide de laquelle le gaz d'essai peut être amené contre le côté inférieur de l'éprouvette d'essai (12),
**caractérisé**
**en ce que** la coupelle d'amenée de gaz (28) est conçue de manière réglable dans sa position relative par rapport à l'éprouvette d'essai (12), de sorte qu'il est possible de faire varier une largeur d'interstice entre l'éprouvette d'essai (12) et la coupelle d'amenée de gaz (28).

2. Dispositif d'essai selon la revendication 1, **caractérisé en ce que** le siège d'échantillon, le poinçon (24) et la coupelle d'amenée de gaz (28) sont agencés à l'intérieur d'un récipient d'essai (14) résistant à la pression.

3. Dispositif d'essai selon la revendication 2, **caractérisé en ce que** le récipient d'essai (14) forme une chambre d'échantillon dans laquelle est logée la coupelle d'amenée de gaz (28), et qui comprend une ouverture de sortie de gaz (32) agencée en-dessus de la coupelle d'amenée de gaz (28).

4. Dispositif d'essai selon la revendication 2 ou la revendication 3, **caractérisé en ce que** le récipient d'essai (14) présente en guise de coque extérieure, une enveloppe double pouvant être traversée par l'écoulement d'un fluide de refroidissement.

5. Dispositif d'essai selon l'une des revendications 2 à 4, **caractérisé en ce que** le dispositif d'essai (10) renferme une coque inférieure (22), qui accueille la coupelle d'amenée de gaz (28), et le siège d'échantillon comprend des corps de roulement (36) en un matériau inerte, placés sur un bord de la coque inférieure (22).

6. Dispositif d'essai selon la revendication 5, **caractérisé en ce que** le dispositif d'essai (10) renferme une coque supérieure (20), qui accueille le poinçon (24), et le siège d'échantillon comprend des corps de roulement (34) en un matériau inerte, placés sur un bord de la coque supérieure (20).

7. Dispositif d'essai selon la revendication 5 ou la revendication 6, **caractérisé en ce que** les corps de roulement (34, 36) sont des billes.

8. Dispositif d'essai selon l'une des revendications précédentes, **caractérisé en ce que** la coupelle d'amenée de gaz (28) est placée sur un poinçon creux (26) par l'intermédiaire duquel le gaz d'essai peut être mené à la coupelle d'amenée de gaz (28).

9. Dispositif d'essai selon la revendication 8, **caractérisé en ce que** la coupelle d'amenée de gaz (28) comporte une ouverture de sortie pour le gaz d'essai, agencée de manière centrale, et des gorges (30) agencées de manière concentrique autour de l'ouverture de sortie.

10. Dispositif d'essai selon l'une des revendications précédentes, **caractérisé en ce que** le poinçon (24) comprend une conduite de gaz par l'intermédiaire de laquelle le gaz d'essai ou un gaz inerte peut être amené sur le côté supérieur de l'éprouvette d'essai (12).

11. Dispositif d'essai selon l'une des revendications précédentes, **caractérisé en ce que** le poinçon (24) présente une forme de type sphérique au niveau de l'application de la charge à l'éprouvette et est réalisé en un matériau inerte et élastique.

12. Procédé pour soumettre une éprouvette d'essai en forme de disque (12) à l'action d'un gaz d'essai en écoulement et sous pression, et simultanément à une charge mécanique, comprenant les étapes suivantes :
(i) fourniture et préparation d'un dispositif d'essai (10), qui comprend
- un siège d'échantillon, qui est configuré de manière à ce qu'une zone de bordure de l'éprouvette d'essai (12) repose sur le siège d'échantillon, et qu'une zone intérieure de l'éprouvette d'essai (12) soit accessible par son côté supérieur et son côté inférieur ;
- un poinçon (24) agencé au-dessus du siège d'échantillon et à l'aide duquel il est possible d'exercer une charge mécanique pouvant être prédéterminée sur le côté supérieur de l'éprouvette d'essai (12) ; et
- une coupelle d'amenée de gaz (28) agencée en-dessous du siège d'échantillon et à l'aide de laquelle le gaz d'essai peut être amené contre le côté inférieur de l'éprouvette d'essai (12), la coupelle d'amenée de gaz (28) étant conçue de manière réglable dans sa position relative par rapport à l'éprouvette d'essai (12), de sorte qu'il est possible de faire varier une largeur d'interstice entre l'éprouvette d'essai (12) et la coupelle d'amenée de gaz (28) ;
(ii) fourniture et préparation de l'éprouvette d'essai (12) en forme de disque ;
(iii) mise en place de l'éprouvette d'essai (12) en forme de disque dans le dispositif d'essai (10) ;
(iv) réglage d'une vitesse d'écoulement du gaz d'essai au niveau de l'éprouvette d'essai (12) par la prescription d'un débit massique de gaz et/ou par le réglage d'une largeur d'interstice entre la coupelle d'amenée de gaz (28) et l'éprouvette d'essai (12) en forme de disque, et
(v) sollicitation du côté supérieur de l'éprouvette d'essai (12) en forme de disque avec une charge pouvant être prédéterminée, et exposition simultanée du côté inférieur de l'éprouvette d'essai (12) en forme de disque à l'écoulement du gaz d'essai.

13. Procédé selon la revendication 12, d'après lequel le siège d'échantillon, le poinçon (24) et la coupelle d'amenée de gaz (28) sont agencés à l'intérieur d'un récipient d'essai (14) résistant à la pression, et d'après lequel l'étape (iv) s'effectue sous pression.

14. Procédé selon la revendication 12 ou la revendication 13, d'après lequel dans l'étape (iv), une température de l'éprouvette d'essai (12) en forme de disque se situe dans une plage de -50°C à 850°C.

15. Procédé selon l'une des revendications 12 à 14, d'après lequel dans l'étape (iv), une température du gaz d'essai se situe dans une plage de -50°C à 1000°C.

16. Procédé selon la revendication 15, d'après lequel la vitesse d'écoulement du gaz d'essai se situe à une valeur de 0,1 m/s jusqu'à 100 m/s.

17. Procédé selon l'une des revendications 12 à 16, d'après lequel dans l'étape (iv) on fait varier, pendant le déroulement du procédé, une ou plusieurs des grandeurs parmi la vitesse d'écoulement du gaz d'essai, la température de l'éprouvette d'essai (12) en forme de disque, la température du gaz d'essai, la pression du gaz et la charge mécanique.
